# FASCICULE DE BREVET EUROPEEN

(11) **EP 0 403 375 B1**
(45) Date de publication et mention de la délivrance du brevet: **09.02.1994**
(21) Numéro de dépôt: 90401632.6
(22) Date de dépôt: 13.06.1990
(51) Int. Cl.: B60L 5/32

(54) **Pantographe à coussin d'air**
Scherenstromabnehmer mit Luftkissen
Pantograph with air cushion

(30) Priorité: 14.06.1989 FR 8907864
(43) Date de publication de la demande: 19.12.1990
(73) Titulaire: FAIVELEY TRANSPORT, 93400 Saint-Ouen Cédex (FR)
(72) Inventeur: Forte, Pascal, F-37200 Tours (FR); Blanvillain, Gérard, F-37270 Veretz (FR)
(74) Mandataire: Keib, Gérard

(56) Documents cités:
- FR-A- 2 135 830

## Description

La présente invention se rapporte à un système, dénommé pantographe, pour l'alimentation en courant électrique d'un train à traction électrique à partir de conducteurs aériens ou fils caténaires.

Plus précisément l'invention se rapporte aux systèmes permettant d'améliorer le contact électrique entre l'élément supérieur du pantographe, dénommé archet, et le fil caténaire.

En effet, il est important que le contact électrique ci-dessus soit établi en permanence pendant les périodes d'utilisation et de plus, il est souhaitable que ce contact offre au passage du courant électrique une résistance aussi constante que possible, quelles que soient les circonstances et en particulier quelle que soit la vitesse du train.

En vue d'obtenir un contact électrique régulier entre l'archet et le caténaire, il est connu d'utiliser des systèmes ayant pour fonction d'appliquer l'archet contre la caténaire avec une certaine élasticité, due par exemple à la présence de ressorts, ces derniers permettant d'encaisser certaines variations de l'environnement sans que le contact en soit trop affecté.

En particulier, il est connu d'utiliser un dispositif du type dit à coussin d'air, comprenant un organe pneumatique constitué par deux flasques parallèles reliés à leur périphérie par un élément en forme de soufflet élastique, le premier flasque étant solidaire de la structure de la voiture motrice et le deuxième flasque pouvant subir un déplacement d'ampleur limitée.

Lorsque le soufflet est gonflé avec un gaz, tel que de l'air comprimé sous une pression déterminée, les replis du soufflet sont dilatés, ce qui entraîne un déplacement du flasque mobile. A ce déplacement, on fait correspondre un mouvement de rotation de l'axe d'un bras inférieur du pantographe, ce mouvement de rotation permettant d'exercer une certaine pression de l'archet contre la caténaire.

En fonctionnement, la locomotive roulant sur la voie, le dispositif ci-dessus joue, dans une certaine mesure, le rôle d'un ressort de rappel de caractéristiques particulières.

Pour assurer un mouvement approximativement horizontal du flasque mobile, on le rend généralement solidaire de l'extrémité d'une tige sensiblement verticale fixée à son extrémité inférieure, de façon articulée, à la structure de la voiture motrice. La tige ci-dessus est relativement longue et susceptible d'un débattement sensiblement horizontal à son extrémité supérieure, ce qui lui permet de servir de guide au flasque mobile, au cours du déplacement d'amplitude limitée de ce dernier. Il est nécessaire d'utiliser une tige suffisamment longue pour que le déplacement du flasque soit assimilable à un segment de droite.

L'expérience montre que le dispositif du type à coussin d'air ci-dessus, et plus spécialement son système de guidage, présente divers inconvénients :
- le système de guidage est relativement complexe et lourd, ce qui accroît l'inertie de l'ensemble et affecte les performances du pantographe, dans la mesure où un accroissement de l'inertie entraîne une augmentation du temps de réponse de l'ensemble du système aux perturbations,
- la longueur de la tige, imposée par la nécessité d'avoir à son extrémité un déplacement assimilable à un segment de droite, rend le système de guidage encombrant,
- le système de guidage n'empêche par un certain flambement du soufflet de se produire, ce qui peut introduire un écart dans le déplacement du flasque lorsque le dispositif revient à une position d'équilibre dont il a été momentanément écarté et par conséquent un écart injustifié dans la pression d'application de l'archet,
- le système de guidage est exposé aux poussières, aux agents agressifs, aux précipitations atmosphériques, et nécessite une surveillance et des opérations d'entretien relativement fréquentes.

La présente invention a pour but de proposer un nouveau dispositif pour pantographe permettant de réduire très fortement les inconvénients ci-dessus.

La présente invention a pour objet un pantographe pour locomotive à traction électrique comprenant un archet établissant le contact électrique avec un fil caténaire et un dispositif élastique du type à coussin d'air pour appuyer l'archet contre le fil caténaire par l'intermédiaire d'un couple exercé sur un axe d'un bras inférieur du pantographe, ledit dispositif élastique comprenant :
- un premier flasque solidaire de la structure de la locomotive,
- situé vis-à-vis du premier flasque et relié à ce dernier au moyen d'une paroi constituée par un matériau élastique, un deuxième flasque mobile par rapport au premier flasque, les deux flasques formant avec ladite paroi élastique une enceinte étanche contenant un gaz, et notamment de l'air, sous une pression pouvant être différente de la pression atmosphérique,
- disposé à l'intérieur de l'enceinte étanche, un moyen de guidage du deuxième flasque constitué par un organe allongé dont les deux extrémités sont reliées de façon articulée chacune à un flasque, ce moyen permettant audit deuxième flasque de se déplacer selon un mouvement sensiblement de translation par rapport au premier flasque,
- des moyens pour transformer le mouvement de translation du deuxième flasque en une rotation dudit axe du pantographe.

La mise en oeuvre d'un dispositif pneumatique conforme à l'invention procure les avantages suivants :
a) diminution de l'inertie du système grâce à la suppression de l'organe de guidage extérieur à l'enceinte étanche et, simultanément, accroissement de la compacité du système,
b) obtention d'un mouvement de translation du deuxième flasque, qui soit un mouvement reproductible, dans la mesure ou ce mouvement ne dépend pratiquement que de la pression de l'air dans l'enceinte étanche ;
c) suppression de la maintenance de l'organe de guidage du deuxième flasque, puisque cet organe est placé dans une enceinte étanche à l'abri des perturbations de l'environnement, notamment des poussières ou des précipitations, par exemple, cet organe pourra être graissé à vie ;
d) en outre, le maintien de la reproductibilité du mouvement de translation du deuxième flasque est mieux assuré au cours du temps, en raison du fait que l'organe de guidage est protégé à l'intérieur de l'enceinte étanche.

De ce qui précède, il résulte que l'on peut aisément établir une relation entre la pression de l'air comprimé dans l'enceinte étanche et la pression de l'archet sur le fil caténaire, en supposant constants les autres paramètres tels que, par exemple, la distance verticale du fil caténaire par rapport à la voie.

Selon un deuxième aspect, l'invention a pour objet la combinaison d'un dispositif conforme au premier aspect de l'invention et de moyens permettant de faire varier la pression d'air comprimé dans ladite enceinte étanche en vue d'appliquer l'archet sur le fil caténaire avec une pression déterminée, et ladite pression déterminée pouvant elle-même être programmée en fonction de paramètres liés à l'environnement du pantographe : distance verticale du fil caténaire à la voie, vitesse de la locomotive, ...

D'autres particularités de l'invention résulteront de la description qui va suivre d'un exemple de réalisation, donné à titre non limitatif, en se référant aux dessins annexés, sur lesquels :
- la figure 1 est une vue schématique en perspective d'un pantographe actionné au moyen d'un système d'actionnement conforme à l'invention,
- la figure 2 est une vue en coupe partielle agrandie, selon un plan vertical médian, du système d'actionnement de la figure 1,
- la figure 3 est une vue en coupe partielle selon le plan III-III de la figure 2.

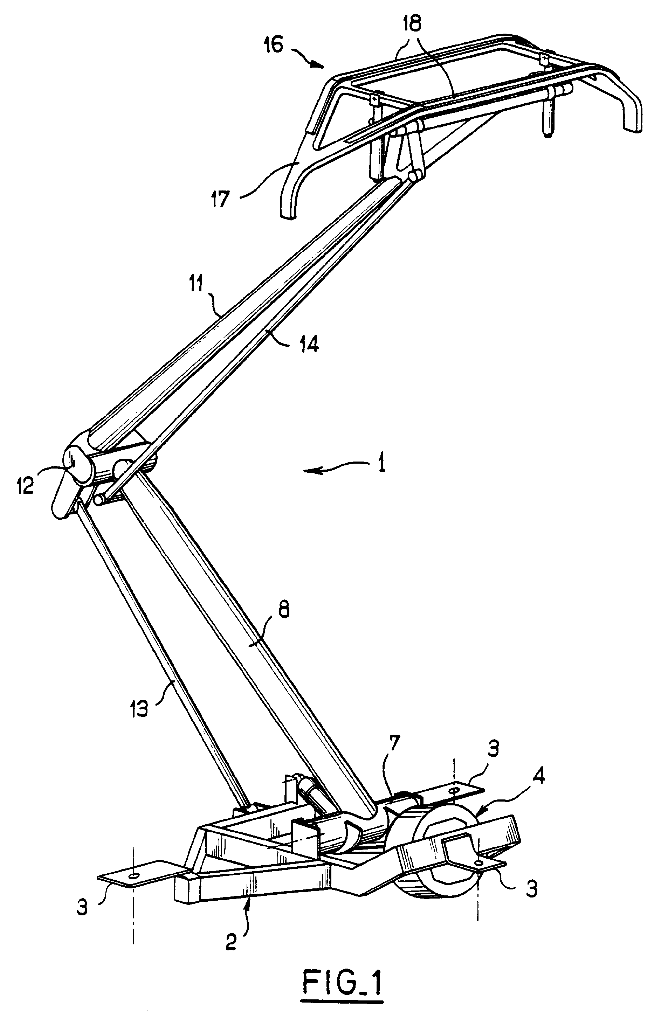

La figure 1 montre un pantographe 1 comprenant une structure de base 2 permettant son montage sur le toit d'une locomotive, ou plus généralement d'une rame ferroviaire, non représentée. Pour cela, la structure 2 est munie de brides de montage 3.

A la structure 2 est également fixée un coussin pneumatique actionneur 4 agissant sur un axe 7 d'un bras inférieur 8 de la structure tubulaire, du pantographe.

Le bras inférieur 8 est relié à un bras supérieur 11, également tubulaire, par une articulation principale 12. Le pantographe 1 comporte en outre des barres de parallélogramme, inférieure et supérieure, respectivement 13 et 14.

Le bras 11 porte, à son extrémité supérieure, un archet 16 assurant le contact avec un fil caténaire non représenté. L'archet 16 comporte une armature 17 munie de deux bandes de frottement 18.

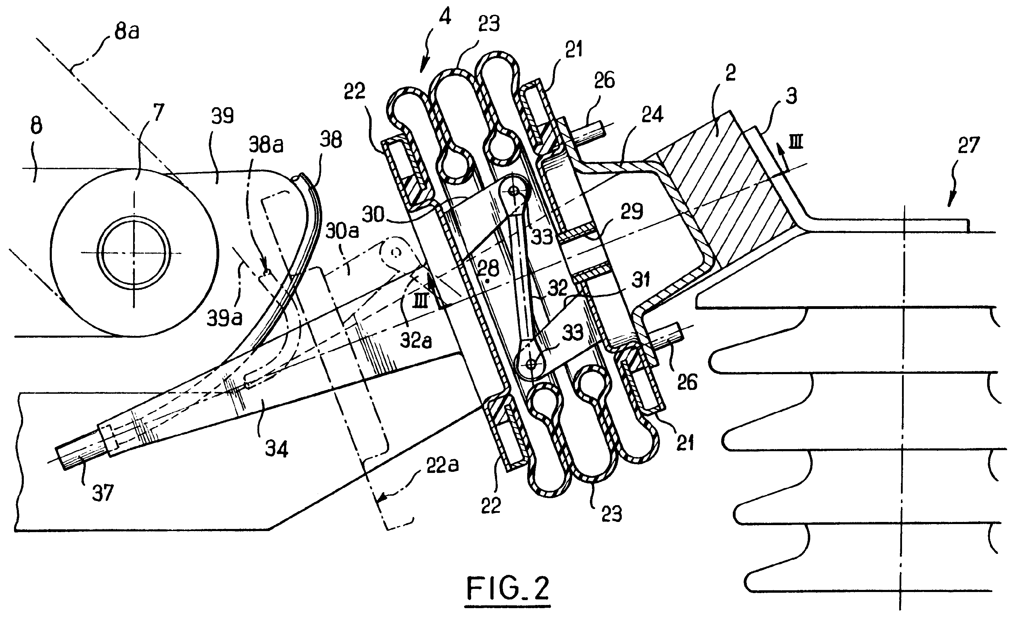

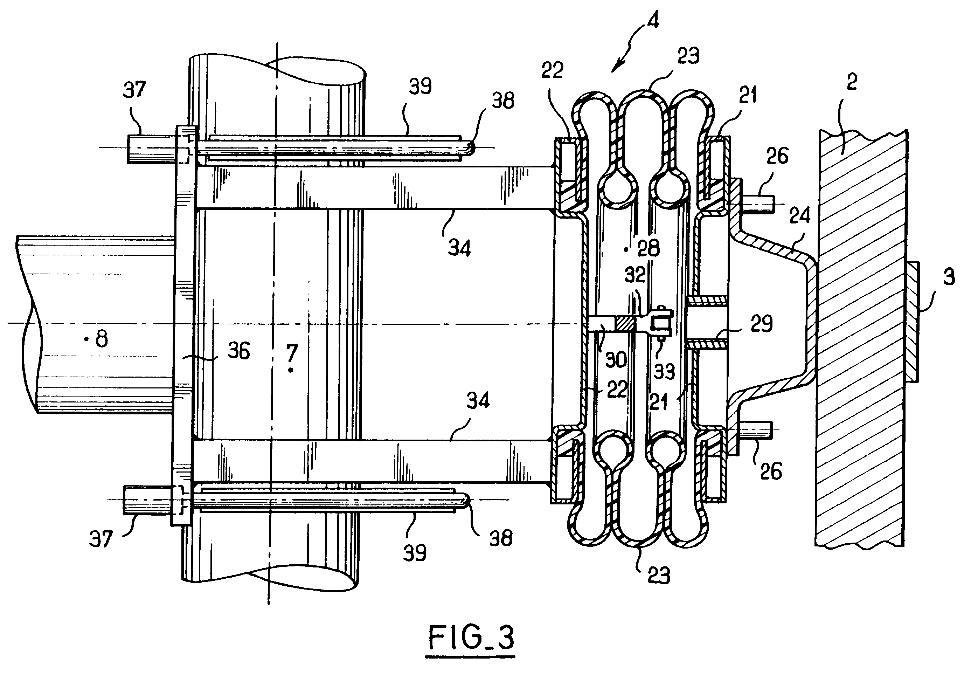

Le coussin pneumatique actionneur 4 est représenté plus en détail sur les figures 2 et 3. Il comprend un premier flasque 21 et un deuxième flasque 22 de forme sensiblement circulaire, reliés au moyen d'un soufflet en caoutchouc 23. Le soufflet 23 a une conformation générale sensiblement cylindrique telle que les deux flasques sont sensiblement coaxiaux. Le flasque 21 est solidaire du toit de la locomotive par l'intermédiaire successivement d'un élément 24 de la structure 2, assujetti au moyen de boulons 26, puis de la bride 3 et d'un isolateur 27.

Les flasques 21, 22, définissent avec le soufflet 23 une enceinte étanche 28, qui communique avec une alimentation pneumatique, non représentée, par l'intermédiaire d'une ouverture 29 pratiquée dans le premier flasque 21. Chaque flasque 21, 22, porte, à l'intérieur de l'enceinte 28, une patte 30, 31, les deux pattes étant disposées dans un même plan perpendiculaire aux deux flasques et sensiblement médian par rapport à chacun d'eux, de part et d'autre de l'axe à la même distance de celui-ci. Les pattes 30, 31 destinées à fixer une biellette 32 pouvant pivoter autour d'axes 33, sont disposées de façon à être symétriques par rapport à un axe sensiblement perpendiculaire audit plan médian et rencontrant la biellette (32) sensiblement au milieu de sa partie allongée.

Au deuxième flasque 22 est fixé un organe actionneur comportant deux bras 34 disposés symétriquement par rapport à un plan axial vertical dudit flasque et reliés par une entretoise sensiblement horizontale 36. A l'entretoise 36 sont fixées les deux extrémités 37 de deux élingues en fil d'acier 38 passant le long de deux cames 39 solidaires de l'axe 7 du bras inférieur 8 du pantographe. Les élingues 38 étant elles-mêmes solidaires en rotation de l'axe 17, le mouvement de translation de l'entretoise 36 est transformé en un mouvement de rotation de l'axe 7 d'amplitude correspondante.

Le fonctionnement du dispositif ci-dessus est le suivant.

Il s'agit d'une part d'équilibrer la masse de la structure articulée du pantographe 1, et d'autre part de fournir un effort statique pour appliquer l'archet 16 contre le fil caténaire. Pour cela un couple d'équilibrage convenable doit être appliqué sur l'axe 7 du bras inférieur 8. Ce couple n'est pas constant sur tout le développement du pantographe : on le paramètre en fonction de l'angle du bras inférieur 8 par rapport au plan horizontal. Ce résultat est obtenu grâce au système came 39 - élingue 38, qui fait varier la distance à l'axe de rotation du point d'application de l'effort provenant du coussin pneumatique.

Sur la figure 2 on a représenté en tirets la position 22a occupée par le flasque 22 lorsqu'on a fait croître la presssion interne de l'enveloppe étanche 28 jusqu'à une certaine valeur. A la position 22a correspondent la position 30a de la patte 30, la position 32a de la biellette 32, la position 38a de l'élingue 38, la position 39a de la came 39, et finalement la position 8a du bras inférieur 8 du pantographe.

En pilotant la pression existant dans le coussin pneumatique, il est aisé de maintenir une pression d'application de l'archet contre le fil caténaire dans une plage prédéterminée.

Par rapport aux systèmes connus, le système de guidage conforme à l'invention présente de nombreux avantages et notamment les suivants :

La biellette 32 travaille pratiquement uniquement en traction et en compression, c'est-à-dire dans des conditions très favorables pour une pièce métallique. Cela constitue un avantage important, notamment du point de vue de la longévité, par rapport aux dispositifs de guidage utilisés antérieurement, tels que le dispositif à tige extérieure précédemment décrit.

L'organe de guidage, se trouvant à l'intérieur de l'enceinte étanche 28 du coussin d'air, est protégé contre toute action de l'environnement (poussières, précipitations, agents agressifs). Cela permet le maintien d'un coefficient de frottement sensiblement constant pour les pièces en mouvement. Le système de guidage conforme à l'invention n'affecte pas l'encombrement en hauteur du système actionneur, puisqu'il est entièrement à l'intérieur de l'enceinte étanche, et cela constitue une caractéristique très favorable pour un dispositif fixé sur un support se déplaçant à grande vitesse.

Le système de guidage n'affecte pas non plus l'encombrement en longueur du système actionneur, car il est possible de le loger dans l'espace restant libre dans l'enceinte étanche lorsque celle-ci est en position contractée (pression d'air minimale).

Il peut être avantageux de définir les différents réglages du système de telle manière que la biellette 32 soit sensiblement parallèle aux deux flasques 21, 22 pour une position moyenne de fonctionnement correspondant à la position moyenne de fonctionnement du pantographe. Ainsi, dans son débattement, la biellette 32 peut prendre différentes positions entre deux positions extrêmes, inclinées par rapport à un plan médian parallèle aux deux flasques et sensiblement symétriques par rapport à ce plan.

Cette disposition facilite l'obtention d'une translation du deuxième flasque 22 dans laquelle ce dernier demeure sensiblement coaxial avec le premier flasque 21. De plus, la précision d'un tel dispositif ne dépend pratiquement pas de la distance plus ou moins grande entre les deux flasques.

Enfin, par rapport aux dispositifs connus comportant des systèmes télescopiques ou des vérins, le dispositif conforme à l'invention présente l'intérêt d'une plus grande simplicité et d'une plus grande légèreté, c'est-à-dire d'une plus faible inertie.

On peut ajouter que la présence simultanée de plusieurs caractéristiques importantes (inertie relativement faible, précision accrue, meilleure fidélité) confère au système conforme à l'invention la possibilité d'une réponse rapide et bien adaptée à tout écart détecté dans les conditions de fonctionnement.

## Revendications

1. Pantographe (1) pour locomotive à traction électrique comprenant un archet (16) établissant le contact électrique avec un fil caténaire et un dispositif élastique du type à coussin d'air (4) pour appuyer l'archet (16) contre le fil caténaire par l'intermédiaire d'un couple exercé sur un axe (7) d'un bras inférieur (8) du pantographe (1), ledit dispositif élastique (4) comprenant :
- un premier flasque (21) solidaire de la structure de la locomotive,
- situé vis-à-vis du premier flasque (21) et relié à ce dernier au moyen d'une paroi constituée par un matériau élastique (23), un deuxième flasque (22) mobile par rapport au premier flasque (21), les deux flasques (21, 22) formant avec ladite paroi élastique (23) une enceinte étanche (28) contenant un gaz, et notamment de l'air, sous une pression pouvant être différente de la pression atmosphérique,
- disposé à l'intérieur de l'enceinte étanche (28), un moyen de guidage du deuxième flasque constitué par un organe allongé (32) dont les deux extrémités sont reliées de façon articulée chacune à un flasque (21, 22) ce moyen permettant au deuxième flasque (22) de se déplacer selon un mouvement sensiblement de translation par rapport au premier flasque (21),
- des moyens pour transformer le mouvement de translation du deuxième flasque (22) en une rotation dudit axe (7) du pantographe.

2. Pantographe conforme à la revendication 1, caractérisé en ce que l'enceinte étanche du dispositif élastique (28) est reliée à une source d'air comprimé et en ce qu'il comprend des moyens pour régler la pression de l'air dans l'enceinte étanche (28).

3. Pantographe conforme à l'une des revendications 1 ou 2, caractérisé en ce que le moyen de guidage (30, 31, 32) est disposé selon un plan sensiblement médian par rapport aux deux flasques (21, 22) et sensiblement perpendiculaire à ceux-ci.

4. Pantographe conforme à l'une des revendications 1 à 3, caractérisé en ce que le moyen de guidage (30 31, 32) est constitué par une biellette (32) reliée à chaque extrémité à une patte (30, 31) portée par chaque flaque, ladite biellette se déplaçant sensiblement dans ledit plan médian.

5. Pantographe conforme à la revendication 4, caractérisé en ce que l'ensemble des deux flasques (21, 22) et du moyen de guidage (30, 31, 32) est sensiblement symétrique par rapport à un axe sensiblement perpendiculaire audit plan médian et rencontrant la biellette (32) au milieu de sa partie allongée.

6. Pantographe conforme à l'une des revendications 1 à 5, caractérisé en ce que les moyens pour transformer le mouvement de translation du deuxième flasque (22) en une rotation de l'axe (7) du pantographe comprennent un système came (39) - élingue (38) permettant d'exercer un couple variable en fonction de l'angle du bras inférieur (8) du pantographe par rapport au plan horizontal.

7. Pantographe conforme à l'une des revendications 2 à 6, caractérisé en ce que les moyens pour régler la pression de l'air dans l'enceinte étanche sont associés à des moyens pour maintenir la pression de l'archet (16) contre le fil caténaire dans des limites prédéterminées.

## Patentansprüche

1. Scherenstromabnehmer (1) für elektrisch betriebene Lokomotive, mit einem den elektrischen Kontakt mit einer Kettenfahrleitung herstellenden Bügel (16) und einer elastischen Vorrichtung vom Typ einer Balgfeder, um den Bügel (16) mittels eines dazwischen auf eine Achse (7) eines unteren Arms (8) des Scherenstromabnehmers (1) ausgeübten Moments gegen die Kettenfahrleitung abzustützen, wobei die elastische Vorrichtung (4) umfaßt:
- einen ersten Flansch (21), der mit dem Aufbau der Lokomotive verbunden ist,
- einen zweiten Flansch (22), der gegenüber dem ersten Flansch (21) angeordnet und mit diesem letzteren mittels einer aus einem elastischen Material (23) gebildeten Wand verbunden ist und in bezug auf den ersten Flansch (21) beweglich ist, wobei die zwei Flansche (21, 22) mit der elastischen Wand (23) einen dichten Hohlraum (28) bilden, der ein Gas, insbesondere Luft, enthält, dessen Druck vom atmosphärischen Druck verschieden sein kann,
- ein Mittel zur Führung des zweiten Flansches, das im Inneren des dichten Hohlraums (28) angeordnet ist und von einem gestreckten Element (32) gebildet wird, dessen zwei Enden auf schwenkbare Weise mit jeweils einem Flansch (21, 22) verbunden sind, wobei dieses Mittel dem zweiten Flansch (22) ermöglicht, sich gemäß einer im wesentlichen translatorischen Bewegung in bezug auf den ersten Flansch (21) zu verschieben,
- Mittel zum Umformen der Translationsbewegung des zweiten Flansches (22) in eine Drehung um die Achse (7) des Scherenstromabnehmers.

2. Scherenstromabnehmer gemäß Anspruch 1, dadurch gekennzeichnet, daß der dichte Hohlraum (28) der elastischen Vorrichtung mit einer Quelle für komprimierte Luft verbunden ist und daß sie Mittel zum Einstellen des Luftdrucks im dichten Hohlraum (28) aufweist.

3. Scherenstromabnehmer gemäß einem der Ansprüche 1 oder 2, dadurch gekennzeichnet, daß das Führungsmittel (30, 31, 32) in einer im wesentlichen mittigen Ebene in bezug auf die zwei Flansche und im wesentlichen senkrecht zu diesen angeordnet ist.

4. Scherenstromabnehmer gemäß einem der Ansprüche 1 bis 3, dadurch gekennzeichnet, daß das Führungsmittel (30, 31, 32) durch eine Stange (32) gebildet ist, die an jedem Ende mit einem von jeweils einem Flansch gehaltenen Befestigungselement (30, 31) verbunden ist, wobei sich die Stange im wesentlichen in der mittigen Ebene verschiebt.

5. Scherenstromabnehmer gemäß Anspruch 4, dadurch gekennzeichnet, daß die Gesamtheit der zwei Flansche (21, 22) und des Führungsmittels (30, 31, 32) im wesentlichen symmetrisch in bezug auf eine zur mittigen Ebene im wesentlichen senkrechte und die Stange (32) in der Mitte ihres gestreckten Teils schneidende Achse ist.

6. Scherenstromabnehmer gemäß einem der Ansprüche 1 bis 5, dadurch gekennzeichnet, daß die Mittel zum Umwandeln der Translationsbewegung des zweiten Flansches (22) in eine Drehung der Achse (7) des Scherenstromabnehmers ein Nocken(39)- und-Seil(38)-System umfassen, das die Ausübung eines in Abhängigkeit vom Winkel des unteren Arms (8) des Scherenstromabnehmers in bezug auf die Horizontale veränderlichen Moments erlaubt.

7. Scherenstromabnehmer gemäß einem der Ansprüche 2 bis 6, dadurch gekennzeichnet, daß die Mittel zum Einstellen des Luftdrucks im dichten Hohlraum mit Mitteln zum Halten des Drucks des Bügels (16) gegen die Kettenfahrleitung in vorgegebenen Grenzen verbunden sind.

## Claims

1. A pantograph (1) for an electric locomotive comprising a bow (16) for making electric contact with an overhead wire and a resilient device similar to an air cushion (4) for pressing the bow (16) against the overhead wire via a torque exerted on the pivot (7) of a bottom arm (8) of the pantograph (1), the resilient device (4) comprising:
a first plate (21) secured to the locomotive structure,
a second plate (22) disposed opposite the first plate (21) and connected thereto by a wall of resilient material (23) and movable relative to the first plate (21), the two plates (21, 22) and the resilient wall (23) forming a sealing-tight chamber (28) containing a gas, inter alia air, at a pressure which may be different from atmospheric pressure,
a means disposed inside the sealing-tight chamber (28) for guiding the second plate and comprising an elongate member (32), the two ends of which are each pivoted to a plate (21, 22), the means enabling the second plate (22) to move substantially in translation relative to the first plate (21), and
means for converting the motion in translation of the second plate (22) into rotation of the pantograph pivot (7).

2. A pantograph according to claim 1, characterised in that the sealing-tight chamber (28) of the resilient device is connected to a source of compressed air and comprises means for adjusting the air pressure in the sealing-tight chamber (28).

3. A pantograph according to claim 1 or 2, characterised in that the guide means (30, 31, 32) are disposed in a substantially median plane relative to the two plates (21, 22) and substantially perpendicular thereto.

4. A pantograph according to any of claims 1 to 3, characterised in that the guide means (30, 31, 32) comprise a link (32) connected at each end to a lug (30, 31) borne by each plate, the lug moving substantially in the median plane.

5. A pantograph according to claim 4, characterised in that the set comprising the two plates (21, 22) and the guide means (30, 31, 32) is substantially symmetrical relative to an axis substantially perpendicular to the median plane and meeting the link (32) in the middle of its elongate part.

6. A pantograph according to any of claims 1 to 5, characterised in that the means for converting the motion in translation of the second plate (22) into rotation of the pantograph pivot (7) comprise a cam (39) and sling (38) system for exerting a torque which varies with the angle of the bottom arm (8) of the pantograph to the horizontal plane.

7. A pantograph according to any of claims 2 to 6, characterised in that the means for adjusting the air pressure in the sealing-tight chamber are associated with means for keeping the pressure of the bow (16) against the overhead wire within predetermined limits.
